# EUROPÄISCHE PATENTSCHRIFT

(11) **EP 3 169 943 B1**
(45) Veröffentlichungstag und Bekanntmachung des Hinweises auf die Patenterteilung: **17.04.2019**
(21) Anmeldenummer: 14739439.9
(22) Anmeldetag: 15.07.2014
(51) Int. Cl.: F24S 25/00

(54) **BEFESTIGUNGSVORRICHTUNG ZUR BEFESTIGUNG MINDESTENS EINES SOLARKOLLEKTORS, VERFAHREN ZUR BEFESTIGUNG EINES SOLARKOLLEKTORS SOWIE VERFAHREN ZUR DEMONTAGE EINES SOLARKOLLEKTORS**
FASTENING DEVICE FOR FASTENING AT LEAST ONE SOLAR COLLECTOR, METHOD FOR FASTENING A SOLAR COLLECTOR, AND METHOD FOR DISMOUNTING A SOLAR COLLECTOR
DISPOSITIF DE FIXATION SERVANT À FIXER AU MOINS UN COLLECTEUR SOLAIRE, PROCÉDÉ DE FIXATION D'UN COLLECTEUR SOLAIRE ET PROCÉDÉ DE DÉMONTAGE D'UN COLLECTEUR SOLAIRE

(43) Veröffentlichungstag der Anmeldung: 24.05.2017
(73) Patentinhaber: B Medical Systems S.à r.l., 9809 Hosingen (LU)
(72) Erfinder: MÜLLER, Josef, 54669 Bollendorf (DE); HOFFMANN, Andreas, 54673 Ammeldingen (DE)
(74) Vertreter: ARC-IP
(86) Internationale Anmeldenummer: PCT/EP2014/065168
(87) Internationale Veröffentlichungsnummer: WO 2016/008514

(56) Entgegenhaltungen:
- EP-A2- 2 711 651
- GB-A- 2 273 090
- US-A- 1 955 259
- US-A- 2 493 687
- US-A- 4 620 693
- US-A1- 2011 271 608
- US-A1- 2014 319 439
- US-B1- 6 390 450

## Beschreibung

Die vorliegende Erfindung betrifft eine Befestigungsvorrichtung zur Befestigung mindestens eines Solarkollektors an einem Mast oder dergleichen. Ferner betrifft die vorliegende Erfindung ein Verfahren zur Befestigung eines Solarkollektors sowie ein Verfahren zur Demontage eines Solarkollektors.

Beispiele für bekannte Anordnungen für Befestigungsvorrichtungen an Masten sind in GB2273090A, US4620693A und US2011/271608 offenbart.

Solarkollektoren werden häufig in abgelegenen Gebieten, insbesondere Entwicklungsländern bzw. Katastrophengebieten eingesetzt, in welchen eine stabile, sichere und kontinuierliche Energieversorgung, beispielsweise über ein Stromnetz oder sonstige dezentrale Energieerzeugungsvorrichtungen, nicht gewährleistet werden kann. Bei Dieselgeneratoren ist so beispielsweise die kontinuierliche Versorgung mit Dieseltreibstoff mitunter problematisch. In solchen Gebieten stellen Solarkollektoren oftmals die einzige Möglichkeit dar, stromverbrauchende Geräte wie beispielsweise Mobiltelefone, Kühlvorrichtungen oder Laptops mit Strom zu versorgen.

Für einen optimalen Einsatz von Solarkollektoren, insbesondere zur Maximierung der Energiegewinnung mit Hilfe der Sonnenkollektoren, ist es erforderlich, dass die Solarkollektoren an einem Ort aufgestellt werden, an welchem sie einen möglichst hohen Einfall von Sonnenlicht über den Tag hinweg erhalten. Um eine Beschattung, beispielsweise durch Vegetation oder umliegende Bebauung zu vermeiden, werden Solarkollektoren daher für gewöhnlich an einem erhöhten - also exponierten - Ort aufgestellt.

Während in bewohntem Gebiet grundsätzlich Standorte auf hochgelegenen Dächern ausreichend stabiler Gebäude Verwendung finden, kommen in nur spärlich und mit unzureichender Bauqualität bebauten oder sogar gänzlich unbewohnten, aber für die Energiegewinnung mittels Solarkollektoren sehr gut geeigneten Gegenden, ebenerdige Aufständer oder auch Masten zum Einsatz, auf bzw. an welchen die Solarkollektoren befestigt werden können. Vor allem die Anbringung der Solarkollektoren an Masten erscheint hier vorteilhaft, da derartige Masten einfach gefertigt und nahezu in jeder Umgebung aufgestellt werden können.

Auch wird mit derartigen Masten die Anordnung der Solarkollektoren vollkommen unabhängig von der Dichte und Qualität der vorherrschenden Bebauung. Unter dem Begriff Mast ist dabei im Sinne der Anmeldung jeder sich in seiner axialen Erstreckung vom Erdboden im Wesentlichen senkrecht nach oben erstreckende, vorzugsweise rohrförmig ausgebildete Aufständer zu verstehen. Masten können einfach aus Naturmaterialien, beispielsweise aus Holz, aber auch aus metallischen oder anderen geeigneten Materialien hergestellt und zur Fixierung in den Erdboden, mit oder notfalls auch ohne Verwendung eines Fundaments, eingebracht werden. Selbstverständlich können derartige Masten auch über weitere geeignete und lang bekannte Sicherungsmaßnahmen gegen Neigung oder gegen Umfallen gesichert werden.

Ein weiterer Vorteil des Einsatzes von Masten ist die gute Diebstahlhemmung und der Entzug des Solarkollektors eines ungewünschten Zugangs Dritter. Während beispielsweise auf Dächern oder auf ebenerdigen Aufständern montierte Solarkollektoren meist uneingeschränkt zugänglich sind und damit leicht beschädigt oder entwendet werden können, ist ein auf einem ausreichend hohen Mast angebrachter Solarkollektor außerhalb der Reichweite des ungewünschten Zugriffs durch Dritte. So wird auch jede Art von Manipulationen an dem Solarkollektor verhindert.

Aufgrund des hohen Gewichtes von Solarkollektoren erfolgt die Befestigung an dem gewünschten erhöhten Montageort üblicherweise unter Zuhilfenahme eines Krans, welcher die Solarkollektoren an den erhöhten Montageort hebt. Dort werden diese dann an dem jeweiligen Gebäude bzw. dem jeweiligen Mast befestigt. Nachteilig an der Notwendigkeit eines Krans ist es, dass in vielen Gebieten, in denen Solarkollektoren eingesetzt werden, insbesondere in Entwicklungsländern bzw. Katastrophengebieten, nur in Ausnahmefällen ein Kran verfügbar ist. Meist sind vor Ort nur vereinzelt primitive Hilfsmittel wie beispielsweise Kletterhilfen verfügbar, mit Hilfe derer die Installation von Solarkollektoren nur unter einem erheblichen Aufwand in Einzelteilen und unter teilweise erhöhtem Risiko von Verletzungen für das Montagepersonal und vor allem auch dem Risiko von Beschädigungen der Solarkollektoren montiert werden.

Aufgabe der vorliegenden Erfindung ist es daher, eine Befestigungsvorrichtung sowie ein Verfahren zur Befestigung und Demontage mindestens eines Solarkollektors an einem Montageort, wie beispielsweise an einem Mast oder dergleichen aufzuzeigen, sodass eine sichere Montage unter der Verwendung einfachster Hilfsmittel ermöglicht.

Die Lösung der Aufgabe gelingt mit einer Befestigungsvorrichtung gemäß Anspruch 1, einem Verfahren zur Befestigung nach Anspruch 10 sowie einem Verfahren zur Demontage nach Anspruch 12. Vorteilhafte Weiterbildungen werden in den Unteransprüchen beschrieben.

Die erfindungsgemäße Befestigungsvorrichtung zeichnet sich gegenüber den eingangs beschriebenen und aus dem Stand der Technik bekannten Befestigungsvorrichtungen dadurch aus, dass die Befestigungsvorrichtung einen am Mast befestigbaren Kollektorträger für mindestens einen Solarkollektor, eine am Mast löslich befestigbare Umlenkvorrichtung, eine Windevorrichtung, einen entlang des Mastes bewegbaren Liftkörper und ein Zugelement aufweist. Dabei ist das Zugelement mit einem ersten Ende an der Windevorrichtung befestigt und mit einem zweiten Ende am Liftkörper befestigt, wobei das Zugelement zwischen dem ersten und dem zweiten Ende zumindest teilweise an der Umlenkvorrichtung geführt ist. Erfindungsgemäß ist das Zugelement so an der Windevorrichtung befestigt, dass die Länge des Zugelementes zwischen Windevorrichtung und dem Liftkörper durch das Zugelement verkleinerbar ist, und die Umlenkvorrichtung das Zugelement oberhalb des Montageortes des mindestens einen Solarkollektor am Mast umlenkt. Die Befestigungsvorrichtung ermöglicht es, mindestens einen Solarkollektor an einem vor Ort bereits vorhandenen oder aufzustellenden Mast sicher zu befestigen. Geeignete Masten sind insbesondere Masten von Telegrafen- bzw. Stromleitungen, aber auch hohe Pfosten, Säulen von Gebäuden oder gerade gewachsene Stämme von Bäumen, an denen der Kollektorträger für den mindestens einen Solarkollektor befestigt werden kann. Der Aufbau des Befestigungselementes sieht es vor, dass auch die Windevorrichtung entweder in Bodennähe am Fußpunkt des Mastes selbst bzw. an einem Fixpunkt nahe am Fußpunkt des Mastes löslich befestigt ist, beispielsweise auch durch Erdnägel oder dergleichen unmittelbar am Boden beim Mast. Das Zugelement ist an der Umlenkvorrichtung oberhalb des Montageorts des wenigstens einen Solarkollektor geführt. Dies führt dazu, dass sich beim Verkleinern der Länge des Zugelementes zwischen Windevorrichtung und dem Liftkörper, der Liftkörper in Richtung der Umlenkvorrichtung gezogen wird. Hierdurch kann der Kollektorträger vom Liftkörper angehoben werden.

Für die Befestigung der Umlenkvorrichtung können verschiedene Möglichkeiten in Betracht kommen. Die Befestigung der Umlenkvorrichtung am Mast kann so beispielsweise mit Hilfe eines, an einem Ende geschlossenen Rohrstück erfolgen. Zur Befestigung der Umlenkvorrichtung am Mast wird das offene Ende des Rohrstückes über das dem Fußpunkt entgegengesetzte Ende des Mastes gestülpt. Die Länge des Rohrstückes verhindert dabei, dass die Umlenkvorrichtung seitlich vom Mast kippt. Alternativ kann die Umlenkvorrichtung auch mithilfe Mastklemmen oder dergleichen am Mast befestigt werden.

In einer bevorzugten Ausführungsform der Befestigungsvorrichtung weist die Umlenkvorrichtung wenigsten einen Umlenkkörper auf, wobei der wenigstens eine Umlenkkörper das Zugelement führt. Durch die Führung des Zugelementes wird verhindert, dass das Zugelement auf der Umlenkvorrichtung verrutscht oder sich verkantet. Hierdurch wird sichergestellt, dass sich das Zugelement von der Umlenkvorrichtung nicht herunterspringt, während das Zugelement infolge der verkürzten Länge des Zugelementes zwischen Windevorrichtung und dem Liftkörper sich über die Umlenkvorrichtung bewegt.

Weiterbildend ist der wenigstens eine Umlenkkörper eine Rolle. Die Rolle ist vorzugsweise so gelagert, z.B. Kugelgelagert, dass sie sich frei an der Umlenkvorrichtung drehen kann. Hierdurch wird das Zugelement besonders reibungsarm und sicher über den wenigstens einen Umlenkkörper geführt, wodurch Schäden am Zugelement in Folge einer ansonsten auftretenden Reibbelastung vermieden werden.

Es ist von Vorteil, wenn das Zugelement ein Seil und die Windevorrichtung eine Seilwinde ist. Die Verwendung einer Seilwinde als Windevorrichtung vereinfacht es erheblich, durch das Aufwinden von Seil die Länge des Zugelementes zu verkleinern und dadurch den entlang des Mastes bewegbaren Liftkörper in Richtung der Umlenkvorrichtung zu ziehen. Der Antrieb der Winde kann durch eine Handkurbel erfolgen. Als geeignete Seile kommen unter Anderem Draht- bzw. Kunststoffseile infrage. Dies ermöglicht es auch, den insgesamt einfachen Aufbau der Befestigungsvorrichtung zu erhalten.

Vorteilhaft für die Ausführung der Befestigungsvorrichtung ist es, wenn die Seilwinde einen Motor, insbesondere einen Elektromotor, zum Antrieb aufweist. Hierdurch lässt sich besonders einfach das Seil auf die Seilwinde aufwinden. Zugleich wird ohne körperliche Anstrengung der Kollektorträger mit einem oder mehreren schweren Solarkollektoren zu dessen Montageort entgegen der Schwerkraft vom Liftkörper entlang des Mastes bewegt.

Zweckmäßigerweise weist der Liftkörper ein Führungsmittel auf, wobei das Führungsmittel am Mast anliegt. Bevorzugt ist das Führungsmittel derart ausgebildet, dass es den Mast zumindest teilweise umschließt, wobei zwischen Mast und Führungsmittel ein Abstand vorhanden ist, sodass das Führungsmittel sich entlang des Mastes bewegen kann. Hierdurch wird verhindert, dass der entlang des Mastes bewegbare Liftkörper aufgrund einer, beispielsweise durch Wind, horizontal ausgeübten Kraft um den Mast herum pendelt, während er am Zugelement hängt. Ein derartiges Pendeln ist unerwünscht, da es beim Anheben des Liftkörpers mit dem Kollektorträger sowie dem daran befestigten Solarkollektors zu einer Beschädigung desselben führen kann.

Bevorzugt weist das Führungsmittel wenigstens eine am Mast anliegende Rolle auf. Die anliegende Rolle ist vorzugsweise so gelagert, z.B. Kugelgelagert, dass sie sich frei um das Führungsmittel drehen kann. Wenn der Liftkörper mit dem Führungsmittel entlang des Mastes bewegt wird, kann dies zu Reibung und einem Verkanten des Führungsmittels am Mast führen. Dies wird durch die Verwendung von wenigstens einer am Mast anliegenden Rolle verhindert. Gleichzeitig wird das Spiel, das aufgrund des Abstandes zwischen Mast und Führungsmittel vorhanden ist, minimiert, sodass auch unerwünschte Pendelbewegungen effektiv minimiert werden.

Das Führungsmittel weist wenigstens ein erstes Führungsmittelteil und ein zweites Führungsmittelteil auf, wobei der Abstand zwischen dem ersten Führungsmittelteil und dem zweiten Führungsmittelteil einstellbar ist. Die Einstellbarkeit des Abstandes zwischen den Führungsmittelteilen ermöglicht es, dass das Führungsmittel an unterschiedlich dicke Masten angepasst werden kann und hierdurch sich die Befestigungsvorrichtung universell an einer Vielzahl von Masten mit unterschiedlichen Durchmessern einsetzen lässt. Darüber hinaus kann auch der Abstand zwischen Mast und Führungsmittel so eingestellt werden, dass kein Spiel zwischen Mast und den anliegenden Rollen des Führungsmittels auftritt wodurch unerwünschte Pendelbewegungen besonders effektiv vermieden werden.

Um das Führungsmittel alternativ an unterschiedlich dicke Masten anzupassen, kann das Führungsmittel wenigstens zwei am Mast anliegende Rollen aufweisen, deren Abstand zueinander senkrecht zum Mast einstellbar ist. Bevorzugt sind hier die wenigstens zwei am Mast anliegende Rollen um den Mast herum an gegenüberliegenden Seiten vom Mast angeordnet. Der Abstand der wenigstens zwei am Mast anliegenden Rollen zueinander und zum Mast hin ist beispielsweise durch Langlöcher einstellbar. Durch Lockern einer Schraubverbindung, welche die Rotationsachse der am Mast anliegenden Rolle mit dem Führungsmittel verbindet, wird die Rotationsachse im Langloch verschieblich und kann senkrecht zum Mast verschoben werden, sodass zwischen den wenigstens zwei am Mast anliegenden Rollen und dem Mast kein Spiel mehr auftritt. Durch anschließendes Festziehen der Schraubverbindung wird die Rotationsachse wieder an dem Führungsmittel befestigt. Hierdurch werden unerwünschte Pendelbewegungen besonders effektiv vermieden werden. Zudem kann auf die Einstellbarkeit des Abstandes zwischen dem ersten Führungsmittelteil dem zweiten Führungsmittelteil verzichtet werden, was die Konstruktion des Führungsmittels vereinfacht.

Zweckmäßigerweise ist der Kollektorträger mittels des Liftkörpers entlang des Mastes bewegbar. Durch ein Verkürzen der Länge des Zugelementes zwischen Windevorrichtung und dem Liftkörper wird der Kollektorträger am Mast entlang in Richtung der Umlenkvorrichtung oberhalb des Montageortes des mindestens einen Solarkollektors am Mast bewegt. Hierfür ist der Liftkörper am Mast unterhalb des Kollektorträgers angeordnet, sodass der Kollektorträger in Folge der Schwerkraft auf dem Liftkörper ruht. Alternativ kann der Liftkörper am Mast auch oberhalb oder seitlich des Kollektorträgers angeordnet werden. In diesem Fall ist eine Verbindung zwischen Liftkörper und Kollektorträger derart vorhanden, dass der Kollektorträger vom Liftkörper am Mast in Richtung des Montageorts bewegt werden kann.

Weiterbildend weist der Kollektorträger wenigstens zwei Mastklemmen auf, die im Wesentlichen senkrecht zum Mast bewegbar sind, sodass der Kollektorträger am Mast festklemmbar ist. Die Mastklemmen sind hierfür vorzugsweise über wenigstens eine Schraubverbindung oder dergleichen miteinander verbunden. Durch Betätigen der wenigstens einer Schraubverbindung werden die Mastklemmen im Wesentlichen senkrecht zum Mast aufeinander zubewegt, sodass sich der Abstand zwischen den Mastklemmen verringert und der Mast eingeklemmt wird. Da der Abstand zwischen den Mastklemmen durch die wenigstens eine Schraubverbindung einstellbar ist, lässt sich der Kollektorträger an Masten mit unterschiedlich großem Durchmesser befestigen. Entsprechend ist die Befestigungsvorrichtung durch einfaches Betätigen der wenigstens einen Schraubverbindung an einer Vielzahl von Masten befestigbar, ohne dass größere bauliche Veränderungen an der Befestigungsvorrichtung vorgenommen werden müssen.

Es ist vorteilhafte, wenn der mindestens eine Solarkollektor am Kollektorträger über wenigstens eine Klemmverbindung befestigbar ist. Die wenigstens eine Klemmverbindung ist dabei so gestaltet, dass der mindestens eine Solarkollektor im nicht geklemmten Zustand der wenigstens einen Klemmverbindung in seiner Neigung verändert werden kann. Dadurch kann zur Steigerung der Energiegewinnung die Oberfläche des Solarkollektors im Wesentlichen orthogonal zur Sonne ausgerichtet werden. Durch Schließen der wenigstens einen Klemmverbindung wird der Solarkollektor in der gewünschten Position festgeklemmt und somit am Kollektorträger befestigt.

Das erfindungsgemäße Verfahren zur Befestigung eines Solarkollektors an einem Mast oder dergleichen mit einer erfindungsgemäßen Befestigungsvorrichtung zeichnet sich dadurch aus, dass das Verfahren die nachfolgenden Schritte aufweist:
- Befestigen der Umlenkvorrichtung oberhalb des Montageortes des mindestens einen Solarkollektors am Mast, und
- Befestigen der Windevorrichtung am Mast, und
- Befestigen des Liftkörpers am Mast, sodass der Liftkörper entlang des Masts bewegt werden kann, und
- Befestigen des ersten Endes des Zugelements an der Windevorrichtung; und
- Befestigen des zweiten Endes des Zugelements am Liftkörper, wobei das Zugelement über die Umlenkvorrichtung geführt wird, und
- Montieren des mindestens einen Solarkollektors am Kollektorträger, und
- Verbinden des Kollektorträgers mit dem Liftkörper,
- Betätigen der Windevorrichtung, sodass die Länge des Zugelements zwischen der Windevorrichtung und dem Liftkörper verkleinert, sodass der Liftkörper und der mit dem Liftkörper verbundene Kollektorträger entlang des Masts bewegt wird, und
- Befestigen des Kollektorträgers am Mast, sobald der mindestens eine Solarkollektor den gewünschten Montageort am Mast erreicht hat.

Zunächst wird also die Umlenkvorrichtung oberhalb des Montageortes des mindestens einen Solarkollektors am Mast befestigt. Als Hilfsmittel ist hierfür in der Regel lediglich eine Leiter erforderlich, mit der der Monteur bis oberhalb des gewünschten Montageorts des mindestens einen Solarkollektors am Mast emporsteigt. Je nach Ausführung des Mastes kann dann die Umlenkvorrichtung beispielsweise von oben auf den Mast aufgesetzt werden, indem der Mast in das einseitig geschlossene Rohrelement eingeführt wird. Alternativ, wenn der Mast einen größeren Durchmesser hat als der Innendurchmesser des einseitig geschlossenen Rohrelementes bzw. das Ende des Mastes außerhalb der Reichweite der Leiter liegt, kann die Umlenkvorrichtung seitlich am Mast beispielsweise mit Hilfe von seitlich an der Umlenkvorrichtung vorhandenen Mastklemme am Mast befestigt werden. Andere Befestigungsmöglichkeiten sind selbstverständlich ebenfalls denkbar.

Als zweiter Schritt erfolgt dann die Befestigung der Windevorrichtung am Mast. Dabei wird die Windevorrichtung in Bodennähe am Fußpunkt des Mastes oder in der Nähe zum Fußpunkt des Mastes, unterhalb des Montageortes des mindestens einen Solarkollektor am Mast befestigt. Die Befestigung der Windevorrichtung kann über Mastklemmen erfolgen, alternativ kann die Windevorrichtung auch an einem Fixpunkt am Fußpunkt des Mastes, beispielsweise an der Stoßstange eines am Fußpunkt des Mastes stehenden Fahrzeuges oder dergleichen befestigt sein.

In einem dritten Schritt wird der Liftkörper am Mast befestigt, sodass dieser entlang des Mastes bewegbar ist. Vorzugsweise wird hierfür das Führungsmittel um den Mast herum gelegt und das wenigstens erste Führungsmittelteil und das wenigstens zweite Führungsmittelteil im Abstand so aufeinander eingestellt, dass die wenigstens eine Rolle des Führungsmittels am Mast anliegt, sodass das Führungsmittel am Mast bewegbar ist, ohne sich am Mast zu verhaken oder zu reiben.

In einem vierten Schritt wird das erste Ende des Zugelementes an der Windevorrichtung und in einem fünften Schritt das zweite Ende des Zugelementes am Liftkörper befestigt, wobei das Zugelement über die Umlenkvorrichtung geführt wird. Hierfür steigt der Monteur der Befestigungsvorrichtung, beispielsweise mithilfe der Leiter, am Mast empor und führt das Zugelement derart über die Umlenkvorrichtung, dass das Zugelement von dem wenigstens einen Umlenkkörper geführt wird und ein seitliches Abrutschen des Zugelementes von der Umlenkvorrichtung verhindert wird. Die Befestigung des zweiten Endes des Zugelementes am Liftkörper kann beispielsweise durch Einhaken eines am Zugelement vorhandenen Karabinerhakens in den Liftkörper erfolgen.

In einem sechsten Schritt wird der mindestens eine Solarkollektor am Kollektorträger montiert. Vorzugsweise werden vorbereitend die Oberflächen des wenigstens einen Solarkollektors zunächst so ausgerichtet wie es für die spätere Montage am Montageort optimal ist, nämlich so, dass die Sonneneinstrahlung möglichst senkrecht auf die Oberfläche des wenigstens einen Solarkollektors trifft. Sobald der wenigstens eine Solarkollektor ausgerichtet ist wird die wenigstens eine Klemmverbindung angezogen, sodass der wenigstens eine Solarkollektor am Kollektorträger festgeklemmt ist.

Im siebten Schritt wird der Kollektorträger mit dem Liftkörper verbunden. Dies erfolgt vorzugsweise entweder derart, dass der Kollektorträger oberhalb des Liftkörpers auf den Liftkörper aufgesetzt wird, sodass dieser aufgrund der Schwerkraft auf dem Liftkörper ruht. Alternativ kann der Kollektorträger aber auch unterhalb oder seitlich des Liftkörpers mit dem Liftkörper verbunden werden, beispielsweise durch Einhaken eines Karabinerhakens oder dergleichen.

Der achte Schritt umfasst das Betätigen der Windevorrichtung, sodass die Länge des Zugelementes zwischen der Windevorrichtung und dem Liftkörper verkleinert wird. Da die Windevorrichtung am Mast bzw. an einem Fixpunkt am Fußpunkt des Mastes unbeweglich befestigt ist und die Umlenkvorrichtung oberhalb des Montageortes des wenigstens einen Solarkollektors am Mast befestigt ist, bewirkt ein Verkürzen des über die Umlenkvorrichtung geführten Zugelementes, dass der Liftkörper durch das Zugelement in Richtung der Umlenkvorrichtung bewegt wird. Dabei hebt der Liftkörper auch den mit dem Liftkörper verbundenen Kollektorträger an. Da die Umlenkvorrichtung oberhalb des Montageortes des wenigstens einen Solarkollektors am Mast befestigt ist, kann der Liftkörper den Kollektorträger bis zum Montageort des wenigstens einen Solarkollektors anheben.

In einem neunten Schritt wird der Kollektorträger am Mast befestigt, sobald der mindestens eine Solarkollektor den gewünschten Montageort am Mast erreicht hat. Vorzugsweise wird hierfür die wenigsten eine Schraubverbindung der Mastklemmen am Kollektorträger derart betätigt, dass der Abstand zwischen den Mastklemmen reduziert wird und hierdurch der Mast zwischen den Mastklemmen eingeklemmt wird. Alternative Befestigungsmöglichkeiten des Kollektorträgers sind selbstverständlich auch denkbar.

Vorteilhaft an dem erfindungsgemäßen Verfahren zur Befestigung mindestens eines Solarkollektors an einem Mast ist es, dass mit Ausnahme einer Leiter und ggf. von Standardwerkzeug zum Betätigen von Schraubverbindungen in der Regel keine weiteren Hilfsmittel erforderlich sind, um den wenigstens einen Solarkollektor am Mast oder dergleichen zu befestigen. Die zuvor genannten Hilfsmittel sind in der Regel global und universell verfügbar, so beispielsweise auch in abgelegenen Regionen, wie in Entwicklungsländern oder Katastrophengebieten, sodass die Befestigungsvorrichtung ohne weitere Behelfsmittel einsetzbar ist.

Es ist zweckmäßig, dass nach Befestigen des Solarkollektors am Mast die Verbindung zwischen Liftkörper und Kollektorträger gelöst wird, und die am Mast befestigbare Umlenkvorrichtung, die Windevorrichtung, der entlang des Mastes bewegbare Liftkörper und das Zugelement vom Mast demontiert werden. Am Mast einzig verbleibend sind folglich der Kollektorträger sowie der auf dem Kollektorträger befestigte und insbesondere festgeklemmte wenigstens eine Solarkollektor. Eine derartige Vorgehensweise ist vorteilhaft, da hierdurch ein unbefugtes Demontieren des Solarkollektors vom Mast wirksam erschwert wenn nicht sogar verhindert wird.

Die Erfindung umfasst weiter ein Verfahren zur Demontage des mindestens eines Solarkollektors von einem Mast oder dergleichen, wobei die Demontage die nachfolgenden Verfahrensschritte umfasst:
- Befestigen der Umlenkvorrichtung oberhalb des Montageortes des mindestens einen Solarkollektors am Mast, und
- Befestigen der Windevorrichtung am Mast, und
- Befestigen des Liftkörpers am Mast, sodass dieser entlang des Mastes bewegbar ist, und
- Befestigen des ersten Endes des Zugelementes an der Windevorrichtung, und
- Befestigen des zweiten Endes des Zugelementes am Liftkörper, wobei das Zugelement über die Umlenkvorrichtung geführt wird, und
- Verbinden des Kollektorträgers mit dem Liftkörper,
- Lösen der Befestigung des Kollektorträgers am Mast, und
- Betätigen der Windevorrichtung, sodass die Länge des Zugelementes zwischen der Windevorrichtung und dem Liftkörper vergrößert wird, sodass der Liftkörper und der mit dem Liftkörper verbundene Kollektorträger entlang des Mastes bewegt werden, und
- Lösen der wenigstens einen Klemmverbindung zwischen Kollektorträger und dem wenigstens einen Solarkollektor, sodass der wenigstens eine Solarkollektor vom Kollektorträger abgenommen werden kann, und
- Demontage der am Mast befindlichen Umlenkvorrichtung, der Windevorrichtung des entlang des Mastes bewegbaren Liftkörpers, des Zugelementes und des Kollektorträgers vom Mast.

Bei dem erfindungsgemäßen Verfahren zur Demontage der Befestigungsvorrichtung ergeben sich daher im Wesentlichen die identischen Vorteile wie bei dem erfindungsgemäßen Verfahren zur Befestigung der Befestigungsvorrichtung. Es sind daher mit Ausnahme einer Leiter und ggf. von Standardwerkzeug zum Betätigen von Schraubverbindungen in der Regel keine weiteren Hilfsmittel erforderlich sind, um den wenigstens einen Solarkollektor am Mast oder dergleichen zu befestigen. Mithin ist eine besonders einfache und unkomplizierte Demontage möglich.

Nachfolgend wird die Erfindung anhand von in den Zeichnungen beschriebenen Ausführungsbeispielen näher erläutert. Hierbei zeigen schematisch:
- Fig. 1: ein Ausführungsbeispiel der Befestigungsvorrichtung zur Befestigung von acht Solarkollektoren an einem Mast;
- Fig. 2: eine Befestigungsvorrichtung gemäß dem in Fig.1 gezeigten Ausführungsbeispiel, wobei die Solarkollektoren sich unterhalb des Montageortes am Mast befinden;
- Fig. 3: eine Ansicht einer teilweise am Mast montierter Befestigungsvorrichtung gemäß Fig.1;
- Fig. 4: eine Detailansicht der Umlenkvorrichtung der in Fig. 1 gezeigten Befestigungsvorrichtung;
- Fig. 5: eine Detailansicht der Windevorrichtung am Fußpunkt des Masts gemäß der in Fig. 1 gezeigten Befestigungsvorrichtung;
- Fig. 6: eine Ansicht der Befestigungsvorrichtung gemäß Fig. 1, ohne Kollektorträger und ohne Solarkollektoren;
- Fig. 7: eine Detailansicht der Windevorrichtung, des Zugelements sowie des Liftkörpers der in Fig. 1 gezeigten Befestigungsvorrichtung;
- Fig. 8: eine Detailansicht der Befestigungsvorrichtung gemäß Fig. 1, wobei am Mast die Windevorrichtung der Liftkörper, sowie der Kollektorträger mit Solarkollektoren unterhalb des Montageortes der Solarkollektoren gezeigt sind;
- Fig. 9: eine Detailansicht der Befestigungsvorrichtung gemäß Fig. 1 mit den Solarkollektoren an deren Montageort; und
- Fig.10: eine Detailansicht der Befestigungsvorrichtung nach Fig. 1 mit Solarkollektoren am Montageort und einem Hilfsmittel zur Montage; und
- Fig. 11: eine Ansicht der Befestigungsvorrichtung nach Fig. 1, wobei die Befestigungsvorrichtung gegen unbefugtes Entwenden gesichert ist.

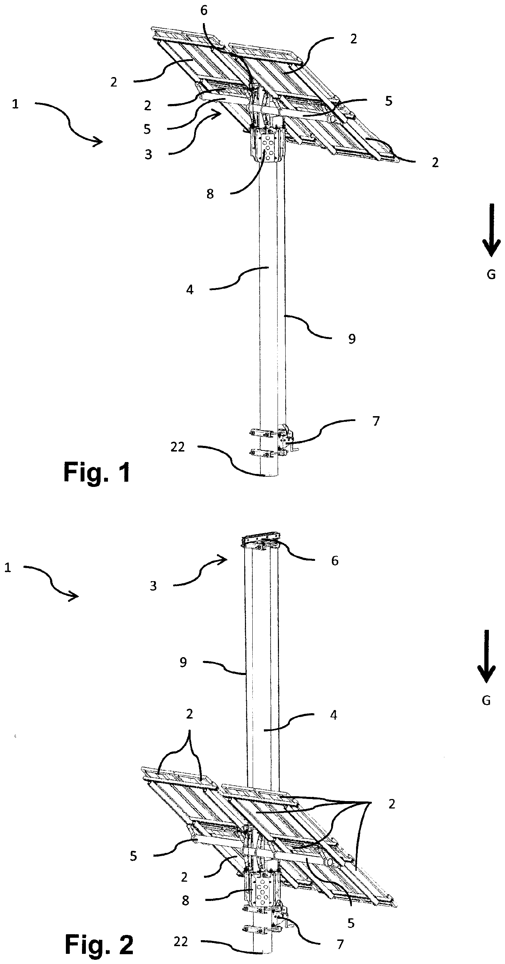

Fig. 1 zeigt eine erfindungsgemäße Befestigungsvorrichtung 1 zur Befestigung von acht Solarkollektoren 2 an einem Mast 4. Die dargestellte Ausführungsform weist zwei Kollektorträger 5 auf, an denen jeweils vier Solarkollektoren am Montageort 3 an dem Mast 4 befestigt sind. Ferner wird die Umlenkvorrichtung 6 gezeigt, welche oberhalb des Montageortes 3 am Mast 4 befestigt ist. Unterhalb des Montageortes 3 ist der Liftkörper 8 angeordnet welcher über das Zugelement 9 mit der Windevorrichtung 7 am Fußpunkt des Mastes 22 verbunden ist. In diesem Ausführungsbeispiel ist das Zugelement 9 ein Seil. Das Zugelement 9 bzw. Seil wird dabei über die Umlenkvorrichtung 6 geführt. Ferner ist die Länge des Zugelementes 9 verkürzt.

Die in Fig. 2 gezeigte Befestigungsvorrichtung 1 entspricht der in Fig. 1 dargestellten Befestigungsvorrichtung 1, wobei das über die Umlenkvorrichtung 6 geführte Zugelement 9 bzw. Seil noch nicht verkürzt ist. Dies hat zur Folge, dass der Liftkörper 8, welcher mit der Windevorrichtung 7 über das über die Umlenkvorrichtung 6 geführte Zugelement verbunden ist, sich in einer Position unterhalb des Montageortes 3 befindet. Die zwei Kollektorträger 5 sind oberhalb des Liftkörpers angeordnet, sodass diese auf Grund der Schwerkraft G auf dem Liftkörper 8 ruhen.

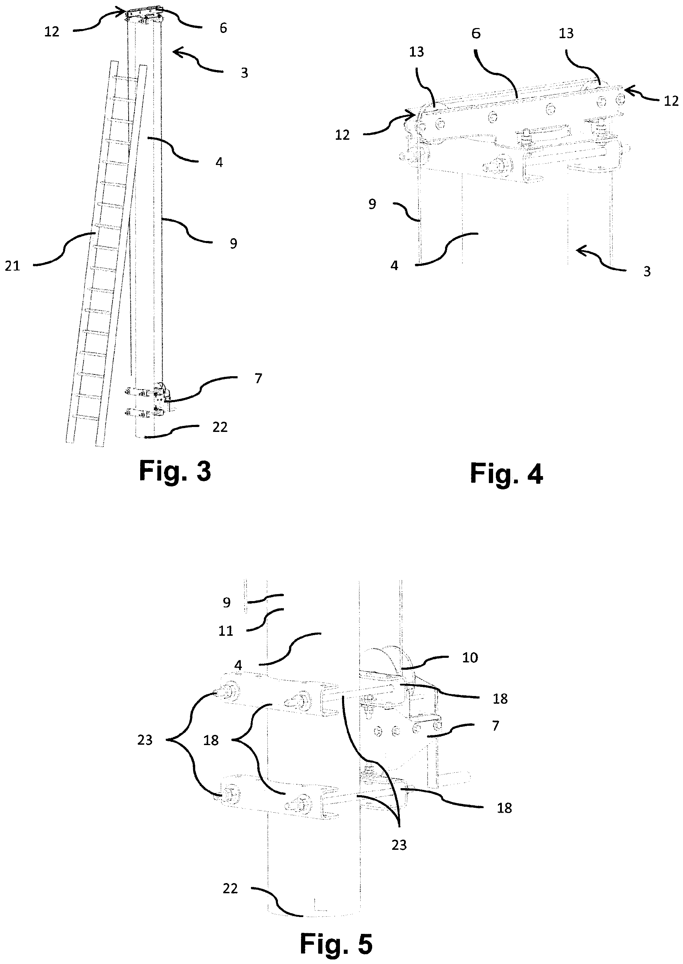

Fig. 3 ist eine Ansicht der teilweise am Mast montierten Befestigungsvorrichtung 1. Oberhalb des Montageortes 3 ist die Umlenkvorrichtung 6 mit dem Umlenkkörper 12 am Mast 4 befestigt. Als Hilfsmittel für die Befestigung der Umlenkvorrichtung 6 am Mast 4 ist eine Leiter 21 gezeigt, welche am Mast 4 angelehnt wird, sodass ein Monteur (nicht gezeigt) am Mast 4 empor steigen kann, um die Umlenkvorrichtung 6 am Mast 4 zu befestigen. Fig. 3 zeigt ferner, wie das Zugelement 9 bzw. das Seil von der Windevorrichtung 7 über die Umlenkvorrichtung 6 geführt ist.

Eine detaillierte Darstellung der Umlenkvorrichtung 6 ist in Fig. 4 gezeigt. Die am Mast 4 befestigte Umlenkvorrichtung 6 weist zwei Umlenkkörper 12 auf, welche als Rolle 13 ausgeführt sind. Mit Hilfe der zwei Rollen 13 wird das Zugelement 9 über die Umlenkvorrichtung 6 geführt, wobei die Rollen die Reibung zwischen Umlenkvorrichtung 6 und dem Zugelement 9 bzw. dem Seil minimieren und ein Abspringen oder Verhaken des Zugelements 9 bzw. des Seils wirksam verhindern.

Fig. 5 ist eine Detailansicht der Befestigungsvorrichtung 1 in welcher die Windevorrichtung 7 und deren Befestigung am Mast in Form von Mastklemmen 18 dargestellt ist. In der gezeigten Ausführungsform ist die Windevorrichtung 7 mit insgesamt vier ersten Mastklemmen 18 oberhalb des Fußpunktes des Mastes 22 am Mast 4 derart befestigt, dass jeweils zwei erste Mastklemmen sich gegenüber liegen. Die gegenüberliegenden ersten Mastklemmen 18 sind mit zwei ersten Schraubverbindungen 23 derart verbunden, dass der Abstand zwischen den gegenüberliegenden ersten Mastklemmen 18 im Wesentlichen orthogonal zum Mast 4 verringert werden kann und so die Windevorrichtung 7 durch Betätigung der ersten Schraubverbindungen 23 am Mast 4 festgeklemmt werden kann. Ferner ist gezeigt, dass das erste Ende 10 des Zugelementes 9 bzw. des Seils an der Windevorrichtung befestigt ist, wohingegen das zweite Ende 11 des Zugelements 9 bzw. des Seils noch frei hängt.

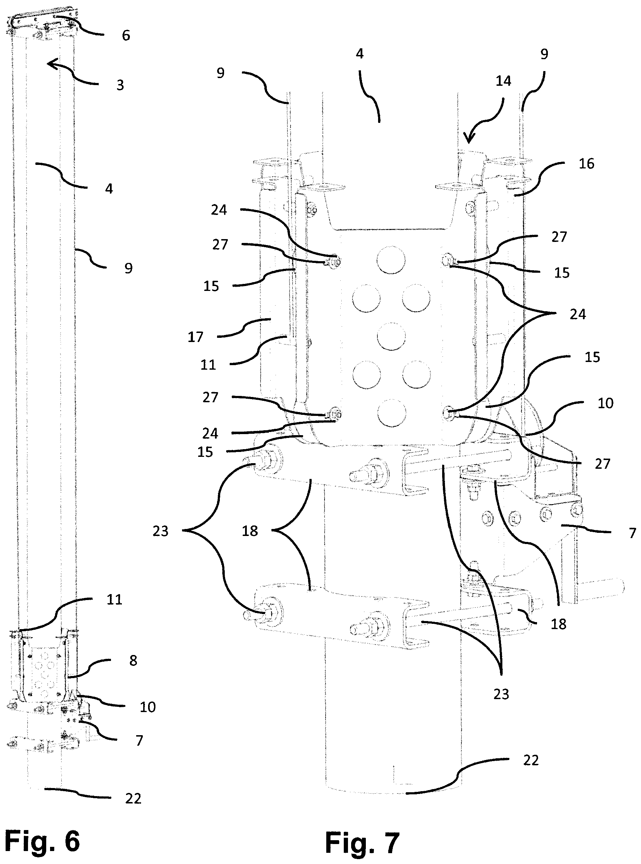

Fig. 6 zeigt die teilweise am Mast 4 montierte Befestigungsvorrichtung 1, wobei im Gegensatz zu Fig. 3 bereits der Liftkörper 8 am Mast verschieblich befestigt ist. Das zweite Ende 11 des Zugelementes 9 bzw. des Seils ist am Liftkörper 8 befestigt. Das erste Ende 10 des über die Umlenkvorrichtung 6 geführten Zugelementes 9 bzw. Seils ist an der Windevorrichtung 7 befestigt. Die Windevorrichtung 7 ist in der Nähe des Fußpunktes des Mastes 22 am Mast 4 befestigt. Da das Zugelement 9 bzw. das Seil noch nicht verkürzt ist, befindet sich der Liftkörper 8 in einer Position unterhalb des Montageortes 3 des wenigstens einen Solarkollektors 2.

Fig. 7 ist eine Detailansicht der in Fig. 6 dargestellten Windevorrichtung 7 sowie des Liftkörpers 8. Wie bereits in Fig. 5 dargestellt, ist erkennbar, dass die Windevorrichtung 7 mit Hilfe von vier ersten Mastklemmen 18 am Mast 4 befestigt ist. Dabei sind jeweils zwei erste Mastklemmen 18 mit einer Schraubverbindung 23 derart verbunden, dass sich die Mastklemmen bei Betätigen der Schraubverbindung in ihrem Abstand orthogonal zum Mast 4 zueinander verringern und somit den zwischen den ersten Mastklemmen 18 befindlichen Mast 4 einklemmen.

Ferner ist erkennbar, dass der Liftkörper 8 ein Führungsmittel 14 aufweist, welches aus vier Führungsmittelteilen zusammengesetzt ist, von denen in Fig. 7 ein erstes Führungsmittelteil 16 sowie ein zweites Führungsmittelteil 17 erkennbar ist. Von den insgesamt acht am Mast anliegende Rollen 15 des Führungsmittels 14 sind in Fig. 7 vier erkennbar. Die acht der am Mast anliegenden Rollen 15 sind am Führungsmittel 14 in zwei übereinander liegenden Ebenen mit je vier am Mast anliegenden Rollen 15 um den Mast herum angeordnet. Dabei sind die vier in einer Ebene liegenden am Mast anliegenden Rollen 15 jeweils um einen Winkel von 90° zueinander versetz. Die Rotrationsachse jeder der am Mast anliegenden Rollen 15 ist je durch eine zweite Schraubverbindung 24 mit dem Führungsmittel 14 verbunden. Die zweite Schraubverbindung 24 ist dabei derart durch ein Langloch 27 geführt, dass die zweite Schraubverbindung 24 zusammen mit der jeweiligen Rotrationsachse senkrecht zum Mast 4 verschoben werden kann. Im Ergebnis ist somit auch jede der am Mast anliegenden Rollen 15 senkrecht zum Mast 4 verschiebbar. Ferner ist in Fig. 7 erkennbar, dass das Zugelement 9 mit einem ersten Ende 10 an der Winde 7 sowie mit dem zweiten Ende an dem Liftkörper 8 befestigt ist.

In einem nicht gezeigten Ausführungsbeispiel weist der Liftkörper ebenfalls ein Führungsmittel auf, welches aus einem ersten Führungsmittelteil sowie einem zweiten Führungsmittelteil zusammengesetzt ist. Im Unterschied zu der in Fig. 7 gezeigten Ausführungsform sind jedoch das erste Führungsmittelteil sowie das zweite Führungsmittelteil sind mit Hilfe von zwei vierten Schraubverbindungen im Abstand zueinander einstellbar, sodass die anliegenden Rollen des Führungsmittels am Mast anliegen. Analog zu der in Fig. 7 dargestellten Ausführungsform weist das Führungsmittel des nicht gezeigten Ausführungsbeispiels bevorzugt acht am Mast anliegende Rollen auf. Wie auch in Fig. 7 gezeigt, ist im nicht gezeigten Ausführungsbeispiel das Zugelement mit einem ersten Ende an der Winde sowie mit dem zweiten Ende an dem Liftkörper befestigt.

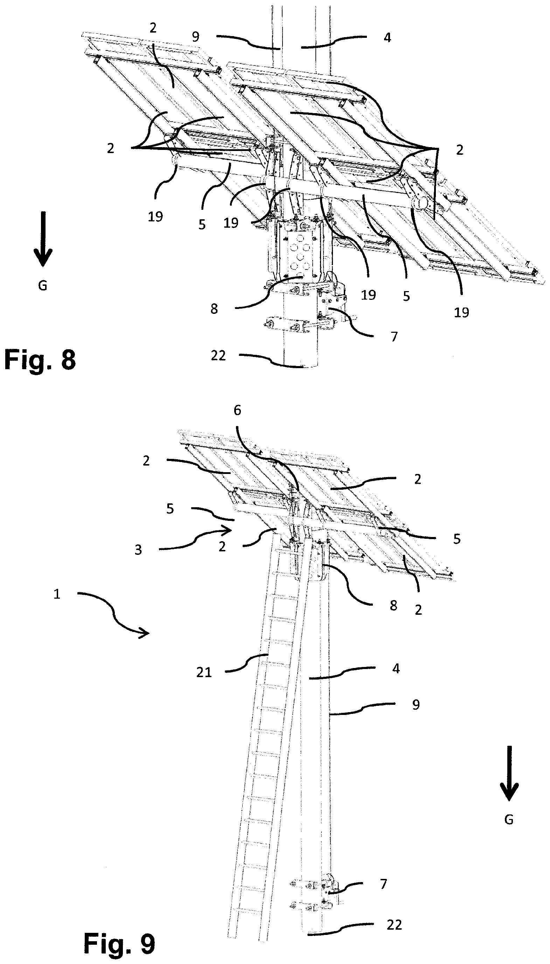

Fig. 8 zeigt eine Detailansicht der Befestigungsvorrichtung 1. Darin ist die Windevorrichtung 7 über das Zugelement 9 bzw. Seil mit dem Liftkörper 8 verbunden. Die Windevorrichtung 7 ist in der Nähe des Fußpunktes des Mastes 22 am Mast 4 befestigt, wohingegen der Liftkörper 8 beweglich am Mast 4 angeordnet ist. Oberhalb des Liftkörpers 8 sind die zwei Kollektorträger 5 mit den jeweils vier Solarkollektoren 2 derart angeordnet, dass die Kollektorträger 5 auf Grund der Schwerkraft G auf dem Liftkörper 8 ruhen. Jeweils vier Solarkollektoren 2 sind mit Hilfe von zwei Klemmverbindungen 19 mit einem Kollektorträger 5 verbunden. Erkennbar ist, dass die Solarkollektoren 2 gegenüber der Vertikalen geneigt sind, sodass die Solarkollektoren zur Sonne hin ausgerichtet sind. Im Weiteren ist in Fig. 8 erkennbar, dass das Zugelement 9 bzw. das Seil noch nicht verkürzt ist.

In Fig. 9 ist eine Befestigungsvorrichtung gezeigt, in welcher das von der Windevorrichtung 7 über die Umlenkvorrichtung 6 zum Liftkörper 8 geführte Zugelement 9 bzw. Seil derart verkürzt worden ist, dass das Liftkörper 8 sich entlang des Mastes 4 in Richtung des Umlenkelementes 6 bewegt hat. Dabei wurden die zwei oberhalb des Liftkörpers 8 angeordneten Kollektorträger 5 mit dem zusammen darauf befindlichen acht Solarkollektoren 2 entgegen der Schwerkraft G in Richtung des Montageortes 3 der Solarkollektoren 2 am Mast 4 gehoben. Um die acht Solarkollektoren 2 am Mast 4 zu befestigen ist ferner als Hilfsmittel eine Leiter 21 gezeigt mit deren Hilfe ein Monteur (nicht gezeigt) am Mast 4 empor steigen kann.

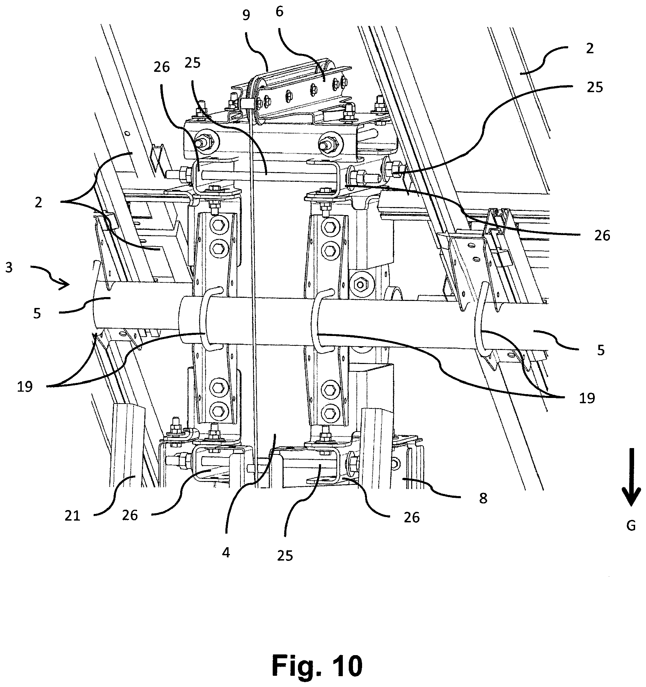

Fig. 10 ist eine Detailansicht der in Fig. 9 dargestellten Befestigungsvorrichtung 1. Die zwei Kollektorträger 5 sind mit vier zweiten Mastklemmen 26 am Mast 4 festgeklemmt. Dabei verbinden jeweils zwei dritte Schraubverbindungen 25 zwei zweite Mastklemmen 26. Durch Betätigen der dritten Schraubverbindungen 25 kann der Abstand zwischen den zweiten Mastklemmen 26 orthogonal zum Mast 4 reduziert und somit der Mast 4 zwischen den zweiten Mastklemmen 26 eingeklemmt wird. Ferner, sind zwei der vier Klemmverbindungen 19 zu erkennen, mit welchen die insgesamt acht Solarkollektoren 2 an den zwei Kollektorträgern 5 festgeklemmt werden. Als Hilfsmittel ist eine Leiter 21 gezeigt, mit welcher man den Mast 4 empor stiegen kann, um die dritten Schraubverbindungen 25 der zweiten Mastklemmen 26 anzuziehen und die Solarkollektoren 2 am Mast 4 zu befestigen.

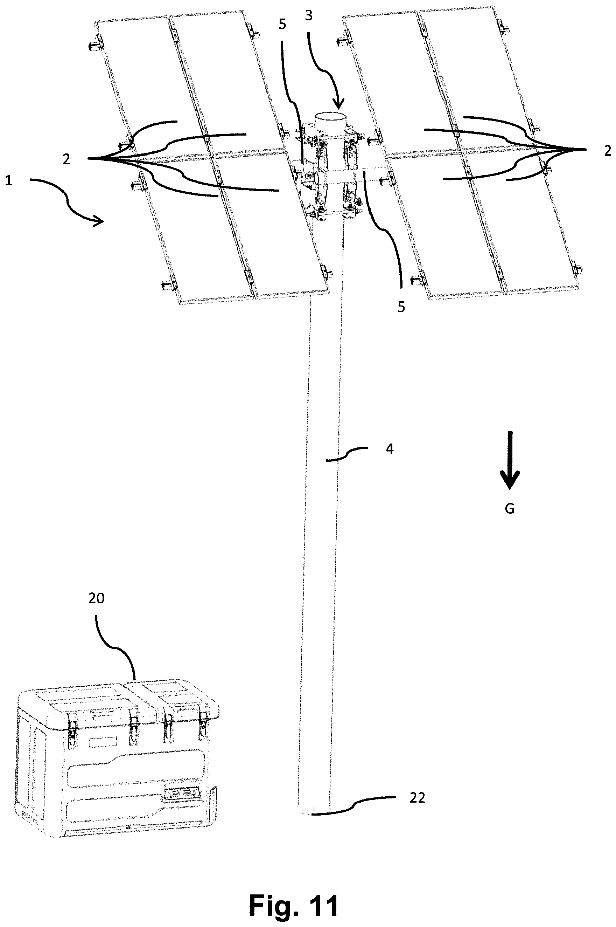

In Fig. 11 ist die Befestigungsvorrichtung 1 dargestellt, bei welcher zwei Kollektorträger 5 mit insgesamt acht Solarkollektoren 2 am Mast 4 befestigt sind. In Fig. 11 ist die Umlenkvorrichtung, der Liftkörper, das Zugelement sowie die Windevorrichtung nicht gezeigt. Diese wurden zum Schutz der Solarkollektoren 2 vor unbefugten Entwenden, vom Mast 4 demontiert. Symbolhaft ist am Fußpunkt 22 des Mastes ferner ein elektrischer Verbraucher 20 gezeigt, welcher über die Solarkollektoren 2 mit elektrischer Energie versorgt werden kann.

### Bezugszeichenliste

- 1: Befestigungsvorrichtung
- 2: Solarkollektor
- 3: Montageort
- 4: Mast
- 5: Kollektorträger
- 6: Umlenkvorrichtung
- 7: Windevorrichtung
- 8: Liftkörper
- 9: Zugelement
- 10: erstes Ende
- 11: zweites Ende
- 12: Umlenkkörper
- 13: Rolle
- 14: Führungsmittel
- 15: anliegende Rolle
- 16: erstes Führungsmittelteil
- 17: zweites Führungsmittelteil
- 18: erste Mastklemme
- 19: Klemmverbindung
- 20: Verbraucher
- 21: Leiter
- 22: Fußpunkt des Masts
- 23: erste Schraubverbindung
- 24: zweite Schraubverbindung
- 25: dritte Schraubverbindung
- 26: zweite Mastklemme
- 27: Langloch
- G: Schwerkraft

## Patentansprüche

1. Befestigungsvorrichtung (1) zur Befestigung mindestens eines Solarkollektors (2) an einem Mast (4) oder dergleichen, wobei die Befestigungsvorrichtung (1)
einen am Mast (4) befestigbaren Kollektorträger (5) für den mindestens einen Solarkollektor (2),
eine am Mast (4) löslich befestigbare Umlenkvorrichtung (6),
eine Windevorrichtung (7),
einen entlang des Masts (4) bewegbaren Liftkörper (8) und
ein Zugelement (9) aufweist,
wobei das Zugelement (9) mit einem ersten Ende (10) an der Windevorrichtung (7) befestigt ist,
und mit einem zweiten Ende (11) am Liftkörper (8) befestigt ist,
wobei das Zugelement (9) zwischen dem ersten Ende (10) und dem zweiten Ende (11) zumindest teilweise an der Umlenkvorrichtung (6) geführt ist,
wobei das Zugelement (9) so an der Windevorrichtung (7) befestigt ist, dass die Länge des Zugelements (9) zwischen Windevorrichtung (7) und dem liftkörper (8) durch das Zugelement (9) verkleinerbar ist, und die Umlenkvorrichtung (6) das Zugelements (9) oberhalb des Montageorts (3) des mindestens einen Solarkollektors (2) am Mast (4) führt,
wobei der Kollektorträger (5) mittels des Liftkörpers (8) entlang des Masts (4) bewegbar ist,
**dadurch gekennzeichnet, dass**
der Liftkörper (8) ein Führungsmittel (14) aufweist, wobei das Führungsmittel (14) am Mast (4) anliegt, und
das Führungsmittel (14) wenigstens ein erstes Führungsmittelteil (16) und ein zweites Führungsmittelteil (17) aufweist, wobei der Abstand zwischen dem ersten Führungsmittelteil (16) und dem zweiten Führungsmittetteil (17) einstellbar ist.

2. Befestigungsvorrichtung (1) nach Anspruch 1, **dadurch gekennzeichnet, dass** die Umlenkvorrichtung (6) wenigstens einen Umlenkkörper (12) aufweist, wobei der wenigstens eine Umlenkkörper (12) das Zugelement (9) führt.

3. Befestigungsvorrichtung (1) nach Anspruch 2, **dadurch gekennzeichnet, dass** der wenigstens eine Umlenkkörper (12) eine Rolle (13) ist.

4. Befestigungsvorrichtung (1) nach einem der vorhergehenden Ansprüche, **dadurch gekennzeichnet, dass** das Zugelement (9) ein Seil ist und die Windervorrichtung (7) eine Seilwinde ist.

5. Befestigungsvorrichtung (1) nach Anspruch 4, **dadurch gekennzeichnet, dass** die Seilwinde eine Motor, insbesondere einen Elektromotor, zum Antrieb aufweist.

6. Befestigungsvorrichtung (1) nach einem der vorhergehenden Ansprüche, **dadurch gekennzeichnet, dass** das Führungsmittel (14) wenigstens eine am Mast (4) anliegende Rolle (15) aufweist.

7. Befestigungsvorrichtung (1) nach einem der vorhergehenden Ansprüche, **dadurch gekennzeichnet, dass** das Führungsmittel (14) wenigstens zwei am Mast (4) anliegende Rollen (15) aufweist, deren Abstand zueinander senkrecht zum Mast (4) einstellbar ist.

8. Befestigungsvorrichtung (1) nach einem der vorhergehenden Ansprüche, **dadurch gekennzeichnet, dass** der Kollektorträger (5) wenigstens zwei Mastklemmen (18) aufweist, die im Wesentlichen senkrecht zum Mast (4) bewegbar sind, sodass der Kollektorträger (5) am Mast (4) festklemmbar ist.

9. Befestigungsvorrichtung (1) nach einem der vorhergehenden Ansprüche, **dadurch gekennzeichnet, dass** der mindestens eine Solarkollektor (2) am Kollektorträger (5) über wenigstens eine Klemmverbindung (19) befestigbar ist.

10. Verfahren zur Befestigung mindestens eines Solarkollektors (2) an einem Mast (4) mit einer Befestigungsvorrichtung (1) nach einem der vorhergehenden Ansprüche, wobei das Verfahren folgende Schritte aufweist:
- Befestigen der Umlenkvorrichtung (6) oberhalb des Montageortes (3) des mindestens einen Solarkollektors (2) am Mast (4); und
- Befestigen der Windevorrichtung (7) am Mast (4); und
- Befestigen des Liftkörpers (8) am Mast (4), so dass der Liftkörper (8) entlang des Masts (4) bewegt werden kann; und
- Befestigen des ersten Endes (10) des Zugelements (9) an der Windevorrichtung; und
- Befestigen des zweiten Endes (11) des Zugelements (9) am Liftkörper (8), wobei das Zugelement (9) über die Umlenkvorrichtung (6) geführt wird; und
- Montieren des mindestens einen Solarkollektors (2) am Kollektorträger (5); und
- Verbinden des Kollektorträgers (5) mit dem Liftkörper (8);
- Betätigen der Windevorrichtung (7), sodass die Länge des Zugelements (9) zwischen der Windevorrichtung (7) und dem Liftkörper (8) verkleinert, sodass der Liftkörper (8) und der mit dem Liftkörper (8) verbundene Kollektorträger (5) entlang des Masts (4) bewegt wird; und
- Befestigen des Kollektorträgers (5) am Mast (4), sobald der mindestens eine Solarkollektor (2) den gewünschten Montageort (3) am Mast (4) erreicht hat.

11. Verfahren nach Anspruch 10,
**dadurch gekennzeichnet, dass**
nach dem Befestigen des Kollektorträgers (5) am Mast (4) die Verbindung zwischen Liftkörper (8) und Kollektorträger (5) gelöst wird; und
die am Mast (4) befestigbare Umlenkvorrichtung (6), die Windevorrichtung (7), der entlang des Masts (4) bewegbare Liftkörper (8) und das Zugelement (9) vom Mast (4) demontiert werden.

12. Verfahren zur Demontage eines Solarkollektors (2) mittels einer Befestigungsvorrichtung (1) nach einem der Ansprüche 1 bis 9, wobei das Verfahren folgende Schritte aufweist:
- Befestigen der Umlenkvorrichtung (6) oberhalb des Montageorts (3) des mindestens einen Solarkollektors (2) am Mast (4); und
- Befestigen der Windevorrichtung (7) am Fußpunkt des Masts (22); und
- Befestigen des Liftkörpers (8) am Mast (4), so dass dieser entlang des Masts (4) bewegbar ist; und
- Befestigen des ersten Endes (10) des Zugelements (9) an der Windevorrichtung; und
- Befestigen des zweiten Endes (11) des Zugelements (9) am Liftkörper (8), wobei das Zugelement (9) über die Umlenkvorrichtung (6) geführt wird;
- Verbinden des Kollektorträgers (5) mit dem Liftkörper (8);
- Lösen der Befestigung des Kollektorträgers (5) am Mast (4); und
- Betätigen der Windevorrichtung (7), so dass die Länge des Zugelements (9) zwischen der Windevorrichtung (7) und dem Liftkörper (8) vergrößert wird, so dass der Liftkörper (8) und der mit dem Liftkörper (8) verbundene Kollektorträger (5) entlang des Masts (4) bewegt werden; und
- Lösen der wenigstens einen Klemmverbindung zwischen Kollektorträger (5) und dem wenigstens einen Solarkollektor (2), so dass der wenigstens eine Solarkollektor (2) vom Kollektorträger (5) abgenommen werden kann; und
- Demontage der am Mast (4) befindlichen Umlenkvorrichtung (6), der Windevorrichtung (7), des entlang des Masts (4) bewegbaren Liftkörpers (8), des Zugelements (9) und des Kollektorträgers (5) vom Mast (4).

## Claims

1. A fixing device (1) for fixing at least one solar collector (2) to a pylon (4) or the like, wherein the fixing device (1) comprises
a collector pedestal (5) for the at least one solar collector (2) that can be fixed to the pylon (4), a reversing device (6) that can detachably be fixed to the pylon (4),
a winch device (7),
a lift body (8) that is moveable along the pylon (4); and
a traction means (9),
wherein the traction means (9) has a first end (10) fixed to the winch device (7) and a second end (11) fixed to the lift body (8),
wherein the traction means (9) is at least partially guided at the reversing device (6) between the first end (10) and the second end (11),
wherein the traction means (9) is fixed to the winch device (7) such that the length of the traction means (9) between winch device (7) and the lift body (8) can be reduced by the traction means (9) and the reversing device (6) guides the traction means (9) above the installation position (3) of the at least one solar collector (2) at the pylon (4),
wherein the collector pedestal (5) can be moved along the pylon (4) by means of the lift body (8),
**characterized in that**
the lift body (8) has a guiding means (14), wherein the guiding means (14) abuts on the pylon (4), and
the guiding means (14) has at least a first guiding means part (16) and a second guiding means part (17), wherein the distance between the first guiding means part (16) and a second guiding means part (17) can be adjusted.

2. The fixing device (1) according to claim 1, **characterized in that** the reversing device (6) has at least one reverse element (12), wherein the at least one reverse element (12) guides the traction means (9).

3. The fixing device (1) according to claim 2, **characterized in that** the at least one reverse element (12) is a pulley (13).

4. The fixing device (1) according to any of the preceding claims, **characterized in that** the traction means (9) is a cable and the winch device (7) is a cable winch.

5. The fixing device (1) according to claim 4, **characterized in that** the cable winch has a drive motor, notably an electric motor.

6. The fixing device (1) according to any of the preceding claims, **characterized in that** the guiding means (14) has at least one roller (15) that abuts the pylon (4).

7. The fixing device (1) according to any of the preceding claims, **characterized in that** the guiding means (14) has at least two rollers (15) that abut the pylon (4) the distance of which to each other perpendicular to the pylon (4) can be adjusted.

8. The fixing device (1) according to any of the preceding claims, **characterized in that** the collector pedestal (5) has at least two pylon clamps (18) that can be moved substantially perpendicular to the pylon (4) so that the collector pedestal (5) can be clamped to the pylon (4).

9. The fixing device (1) according to any of the preceding claims, **characterized in that** the at least one solar collector (2) can be fixed to the collector pedestal (5) via at least one clamp connection (19).

10. A method for fixing at least one solar collector to a pylon (4) with a fixing device (1) according to any of the preceding claims, wherein the method comprises the following steps:
- fixing the reversing device (6) to the pylon (4) above the installation position (3) of the at least one solar collector (2); and
- fixing the winch device (7) to the pylon (4); and
- fixing the lift body (8) to the pylon (4) so that the lift body (8) can be moved along the pylon (4); and
- fixing the first end (10) of the traction means (9) to the winch device; and
- fixing the second end (11) of the traction means (9) to the lift body (8), wherein the traction means (9) is guided over the reversing device (6); and
- mounting the at least one solar collector (2) to the collector pedestal (5); and
- connecting the collector pedestal (5) to the lift body (8);
- actuating the winch device (7) so that the length of the traction means (9) between the winch device (7) and the lift body (8) is reduced so that the lift body (8) and the collector pedestal (5) connected to the lift body (8) are moved along the pylon (4); and
- fixing the collector pedestal (5) to the pylon (4) as soon as the at least one solar collector (2) has reached the desired installation position (3) at the pylon (4).

11. The method according to claim 10,
**characterized in that**
after fixing the collector pedestal (5) to the pylon (4) the connection between the lift body (8) and the collector pedestal (5) is loosened; and
the reversing device (6) that can be fixed to the pylon (4), the winch device (7), the lift body (8) that can be moved along the pylon (4) and the traction means (9) are disassembled from the pylon (4).

12. The method for taking down a solar collector (2) using a fixing device (1) according to any of claims 1 to 9, wherein the method comprises the following steps:
- fixing the reversing device (6) to the pylon (4) above the installation position (3) of the at least one solar collector (2), and
- fixing the winch device (7) to the base of the pylon (22), and
- fixing the lift body (8) to the pylon (4) such that it can be moved along the pylon (4), and
- fixing the first end (10) of the traction means (9) to the winch device, and
- fixing the second end (11) of the traction means (9) to the lift body (8), wherein the traction means (9) is guided over the reversing device (6),
- connecting the collector pedestal (5) to the lift body (8),
- loosening the fixation of the collector pedestal (5) on the pylon (4), and
- actuating the winch device (7) such that the length of the traction means (9) between the winch device (7) and the lift body (8) is increased, so that the lift body (8) and the collector pedestal (5) connected to the lift body (8) are moved along the pylon (4), and
- loosening the at least one clamp connection between the collector pedestal (5) and the at least one solar collector (2), so that the at least one solar collector (2) can be taken off the collector pedestal (5), and
- demounting the reversing device (6) on the pylon (4), the winch device (7) of the lift body (8) that is moveable along the pylon (4), the traction means (9), and the collector pedestal (5) from the pylon (4).

## Revendications

1. Dispositif de fixation (1) pour la fixation d'au moins un collecteur solaire à un mat (4) ou similaire, le dispositif de fixation (1) comportant
un support de collecteur (5) fixable au mat (4), le support étant destiné à au moins un collecteur solaire (2),
un dispositif de renvoi (6) fixable de manière démontable au mat (4),
un treuil (7),
un élément élévateur (8) déplaçable le long du mat (4) et
un moyen de traction (9),
le moyen de traction (9) étant fixé par une première extrémité (10) au treuil 7 et par une deuxième extrémité (11) à l'élément élévateur (8),
le moyen de traction (9) étant mené au moins partiellement sur le dispositif de renvoi (6), entre la première extrémité (10) et la deuxième extrémité (11),
le moyen de traction (9) étant solidarisé au treuil (7) de telle sorte que la longueur du moyen de traction (9) entre le treuil (7) et l'élément élévateur (8) peut être réduite par le moyen de traction (9), et le dispositif de renvoi (6) menant le moyen de traction (9) au-dessus du point de montage (3) d'au moins un collecteur solaire (2) le long du mat (4),
le support de collecteur (5) étant mobile le long du mat (4) à l'aide de l'élément élévateur (8),
**caractérisé en ce que**
l'élément élévateur (8) comporte un moyen de guidage (14) qui est agencé au mat (4), et le moyen de guidage (14) comporte au moins une première partie (16) de moyen de guidage et une deuxième partie (17) de moyen de guidage, la distance entre la première (16) et la deuxième partie (17) de moyen de guidage étant réglable.

2. Dispositif de fixation (1) selon la revendication 1 **caractérisé en ce que** le dispositif de renvoi (6) comporte au moins un élément de renvoi (12) qui guide le moyen de traction (9).

3. Dispositif de fixation (1) selon la revendication 2 **caractérisé en ce que** ledit au moins un dispositif de renvoi (12) est un rouleau (13).

4. Dispositif de fixation (1) selon l'une des revendications précédentes **caractérisé en ce que** le moyen de traction (9) consiste en un câble et **en ce que** le treuil (7) consiste en un treuil à câble.

5. Dispositif de fixation (1) selon la revendication 4 **caractérisé en ce que** le treuil à câble comporte un moteur d'entrainement, notamment un moteur électrique.

6. Dispositif de fixation (1) selon l'une des revendications précédentes **caractérisé en ce que** le moyen de guidage (14) comporte au moins un rouleau (15) appuyé contre le mat (4).

7. Dispositif de fixation (1) selon l'une des revendications précédentes **caractérisé en ce que** le moyen de guidage (14) comporte au moins deux rouleaux (15) appuyés contre le mat (4), la distance entre eux perpendiculairement au mat (4) étant réglable.

8. Dispositif de fixation (1) selon l'une des revendications précédentes **caractérisé en ce que** le support de collecteur (5) comporte au moins deux serre-mat (18) qui sont déplaçables essentiellement perpendiculairement au mat (4) de telle sorte que le support de collecteur (5) est serrable sur le mat (4).

9. Dispositif de fixation (1) selon l'une des revendications précédentes **caractérisé en ce que** ledit au moins un collecteur solaire (2) est solidarisable au support de collecteur (5) moyennant au moins un assemblage par serrage (19).

10. Procédé pour la fixation d'au moins un collecteur solaire (2) à un mat (4) à l'aide d'un dispositif de fixation (1) selon l'une des revendications précédentes, ledit procédé comportant les étapes suivantes :
- fixation du dispositif de renvoi (6) au-dessus du point de montage (3) dudit au moins un collecteur solaire (2) au mat (4) ; et
- fixation du treuil (7) au mat (4) ; et
- fixation de l'élément élévateur (8) au mat (4) de telle sorte que l'élément élévateur (8) peut être déplacé le long du mat (4) ; et
- fixation de la première extrémité (10) du moyen de traction (9) au treuil (7) ; et
- fixation de la deuxième partie (11) du moyen de traction (9) à l'élément élévateur (8), le moyen de traction étant mené sur le dispositif de renvoi (6) ; et
- montage dudit au moins un collecteur solaire (2) au support de collecteur (5) ; et
- liaison du support de collecteur (5) à l'élément élévateur (8) ;
- actionnement du treuil (7) de telle sorte que la longueur du moyen de traction (9) entre le treuil et l'élément élévateur (8) se réduise de telle sorte que l'élément élévateur (8) et le support de collecteur (5) relié à l'élément élévateur (8) sont déplacés le long du mat (4) ; et
- fixation du support de collecteur (5) au mat (4) dès que ledit au mois un collecteur solaire (2) a atteint le point de montage désiré (3) le long du mat (4).

11. Procédé selon la revendication 10
**caractérisé en ce**
**qu'**on libère le lien entre l'élément élévateur (8) et le support de collecteur (5) après la fixation du support de collecteur (5) au mat (4) ; et
**en ce qu'**on démonte du mat (4) le dispositif de renvoi (6) fixable au mat (4), le treuil (7), l'élément élévateur (8) déplaçable le long du mat (4) et le moyen de traction (9).

12. Procédé pour le démontage d'un collecteur solaire (2) à l'aide d'un dispositif de fixation (1) selon l'une des revendications 1 à 9, le procédé comportant les étapes suivantes :
- fixation du dispositif de renvoi (6) au-dessus du point de montage (3) dudit au moins un collecteur solaire (2) au mat (4) ; et
- fixation du treuil (7) au pied du mat (22) ; et
- fixation de l'élément élévateur (8) au mat (4) de telle sorte que celui-ci est déplaçable le long du mat (4) ; et
- fixation de la première extrémité (10) du moyen de traction (9) au treuil ; et
- fixation de la deuxième extrémité (11) du moyen de traction (9) à l'élément élévateur (8), le moyen de traction (9) étant mené sur le dispositif de renvoi (6) ;
- fixation du support de collecteur (5) à l'élément élévateur (8) ;
- désolidarisation du support de collecteur (5) du mat (4) ; et
- activation du treuil (7) de telle sorte que la longueur du moyen de traction (9) entre le treuil (7) et l'élément élévateur (8) s'agrandit, de telle sorte que l'élément élévateur (8) et le support de collecteur (5) relié à l'élément élévateur (8) sont déplacés le long du mat (4) ; et
- désolidarisation dudit au moins un assemblage par serrage entre support de collecteur (5) et ledit au moins un collecteur solaire (2), de telle sorte que ledit au moins un collecteur solaire (2) peut être retiré du support de collecteur (5) ; et
- démontage du dispositif de renvoi (6) fixé au mat (4), du treuil (7), de l'élément élévateur (8) déplaçable le long du mat (4), du moyen de traction (9) et du support de collecteur (5) du mat (4).
